# EUROPÄISCHE PATENTANMELDUNG

(11) **EP 0 582 335 A1**
(43) Veröffentlichungstag der Anmeldung: **09.02.1994**
(21) Anmeldenummer: 93202143.9
(22) Anmeldetag: 21.07.1993
(51) Int. Cl.: B60R 21/20

(54) **Lenkung für Kraftfahrzeuge**

(30) Priorität: 07.08.1992 DE 4226101
(71) Anmelder: PARS Passive Rückhaltesysteme GmbH, 63755 Alzenau (DE)
(72) Erfinder: Herold, Jürgen, D-63743 Aschaffenburg (DE)
(74) Vertreter: Rieger, Harald, Dr.

(57) **Zusammenfassung**

Bei einer Lenkung für Kraftfahrzeuge ist im Lenkrad eine Gassack-Aufprallschutzeinrichtung integriert. Um die Kabel- und Steckverbindungen für den Anschluß (17) des Gasgenerators (16) zu vereinfachen, ist der gestellfest angeordnete Gasgenerator (16) in einer zylinderförmigen Erweiterung (15) des lenkradseitigen Endabschnitts der Lenksäule (14) befestigt.

## Beschreibung

Die Erfindung betrifft eine Lenkung für Kraftfahrzeuge mit an der in der gestellfesten Lenksäule gelagerten Lenkwelle befestigtem Lenkrad mit gegenüber der Horizontalebene des Lenkradkranzes versenkter Lenkradnabe und integrierter Gassack-Aufprallschutzeinrichtung, bestehend aus einem zusammengefalteten, mit einer Kappe mit genau definierter Sollreißlinie abgedecktem und mittels eines gestellfest angeordneten Gasgenerators infolge eines entsprechenden Fahrzeugpulses aufblasbaren Gassacks.

Beim Aufprall eines Kraftfahrzeugs auf ein massives Hindernis wird infolge der rotatorischen Vorwärtsbewegung des Oberkörpers des Fahrzeuginsassens aufgrund der starken Fahrzeugverzögerung der Aufprall insbesondere des Kopfes und des Brustkorbs auf das Lenkrad trotz eines angelegten Sicherheitsgurts nur unzureichend verhindert. Daraus hat sich die Entwicklung von im Lenkrad bzw. im Bereich des Armaturenbretts integrierter Gassack-Aufprallschutzeinrichtungen für Fahrer und Beifahrer ergeben.

Gassack-Aufprallschutzeinrichtungen sind i.a. so aufgebaut, daß beim Auftreffen des Fahrzeugs auf ein massives Hindernis nach der ersten Berührung der Insasse aufgrund seiner Massenträgheit nach vorn zu rutschen beginnt. Nach etwa 10 ms fängt der Gassack an sich aufzublasen, indem der Zündstrom auf den Zünder des Gasgenerators, der wiederum die Zündpille und damit den Treibsatz zündet, geschaltet wird. Nach Filterung und Abkühlung gelangt das Gas in den Gassack. Nach 40 bis 50 ms schlägt der Oberkörper auf den nun voll aufgeblasenen Luftsack, dessen Aufblaszeit ca. 30 ms beträgt, auf. Über Ausströmöffnungen läßt der Gassack sofort das Gas genau definiert wieder entweichen, wobei der Körper weich und ohne große Rückprallkräfte aufgefangen wird.

Von dem aus Sensoren, Diagnosegerät, Auslösegerät, Gasgenerator und Gassack sowie Kabel- und Steckverbindungen zur Energieversorgung gebildeten Gesamtsystem wird verlangt, daß es wenigstens 15 Jahre unter allen möglichen Bedingungen, wie Feuchtigkeit, extreme Temperaturen und Erschütterungen, mit höchster Zuverlässigkeit arbeitet. Um im Ernstfall Defekte und Störungen in den Bauteilen auszuschließen bzw. diese rechtzeitig zu erkennen, unterliegt das System einer ständigen Überwachung mittels eines elektronischen Diagnosegerätes mit Fehleranzeige.

Im allgemeinen sind der Gassack und der Gasgenerator im Lenkrad integriert, so daß die Stromübertragung von der gestellfesten Lenkradsäule auf das Drehbewegungen ausführende Lenkrad über Schleifring bzw. Wickelfeder erfolgt. Außerdem enthält das Lenkrad zusätzlich interne Kabel- und Steckverbindungen für den elektrischen Anschluß des Gasgenerators. Umwelteinflüsse, wie Feuchtigkeit, Temperaturschwankungen und Fremdstoffbenetzung, müssen bei den Stromübertragungsschnittstellen entwicklungsseitig berücksichtigt werden. Abgesehen davon, daß das Gewicht und damit das Massenträgheitsmoment des Lenkrads durch den darin integrierten Gasgenerator und den Gassack nicht unerheblich erhöht wird, sind insbesondere für die zuverlässigen und störungsfreien Kabel- und Steckverbindungen zwischen Lenksäule und Lenkrad besondere Aufwendungen notwendig.

Bei der in der DE-A-2 360 926 beschriebenen Gassack-Aufprallschutzvorrichtung für Kraftfahrzeuge ist der zusammengefaltete aufblasbare Gassack im Bereich der Lenksäule angeordnet und mit einem Gasgenerator verbunden. Der Gasgenerator ist hohlzylinderförmig gestaltet und gestellfest an der Lenksäule befestigt. In einem von dem Gasgenerator ausgehenden Strömungskanal ist ein drehfest mit der Lenkwelle befestigter, topfförmiger und mit einer großen Anzahl radial verlaufender und über den Umfang verteilter Öffnungen versehener Strömungsverteiler vorgesehen, wobei der Gasgenerator innerhalb des Strömungsverteilers angeordnet ist und zwischen dem Strömungsverteiler und der Lenksäule eine relative Beweglichkeit dieser Teile ermöglichende, sie aber druckdicht gegeneinander abschließende Abdichtmittel angebracht sind. Die Öffnung des Gassacks ist auf die äußere Umfangsfläche des Strömungsverteilers aufgeschoben und mit dieser druckdicht verbunden. Als nachteilig wirkt sich bei dieser Gassack-Aufprallschutzvorrichtung aus, daß die Montage des Lenkrads durch den Gassack erfolgen muß und demzufolge der aufgeblasene Gassack eine torusförmige Gestalt annimmt, deren Schutzwirkung nicht optimal ist.

Es ist die Aufgabe der vorliegenden Erfindung, die eingangs beschriebene Gassack-Aufprallschutzeinrichtung für die Lenkung von Kraftfahrzeugen so auszubilden, daß die Kabel- und Steckverbindungen für den elektrischen Anschluß des Gasgenerators in vereinfachter Form gestaltet werden können und dadurch Systemstörungen verringert bzw. ganz verhindert werden.

Die Lösung dieser Aufgabe besteht darin, daß der über der gegenüber der Horizontalebene des Lenkradkranzes versenkten Lenkradnabe angeordnete Gassack mit dem die Gaseintrittsöffnung begrenzenden Rand an einem ringförmigen, mit den Lenkradspeichen verbundenen Arretierungsblech befestigt ist, das konzentrisch zu einer am lenkradseitigen Innenrand der Lenksäule, deren lenkradseitiger Endabschnitt eine zylinderförmige Erweiterung mit einem dem Innendurchmesser des Arretierungsblechs entsprechenden Innendurchmesser besitzt, angebrachten ringförmigen Dichtlippe unter Bildung eines engen, die relative Beweglichkeit zwischen Arretierungsblech und Dichtlippe ermöglichenden Spalts verläuft.

Eine Ausgestaltung der erfindungsgemäßen Lenkung ist darin zu sehen, daß ein die Lenkwelle umgebender hohlzylinder- oder kreistorusförmiger Gasgenerator in der Erweiterung des lenkradseitigen Endabschnitts der Lenksäule eingesetzt und befestigt ist.

Eine andere Ausbildungsform der Erfindung besteht in einer unter der zylinderförmigen Erweiterung des lenkradseitigen Endabschnitts der Lenksäule angebrachten Ausbuchtung der Lenksäule, die über eine Überströmöffnung bzw. -kanal mit der Erweiterung verbunden und in die ein Gasgenerator eingefügt und darin befestigt ist.

Zweckmäßigerweise besitzt das Arretierungsblech eine hutmanschettenförmige Gestalt, deren Flansch an den Lenkradspeichen angebracht ist und deren mit der Dichtlippe einen engen Spalt bildender Schenkel parallel zur Lenkungsachse verläuft.

Die Erfindung ist nachfolgend anhand zweier entlang der Lenkungsachse geführten Schnitte näher und beispielhaft erläutert.

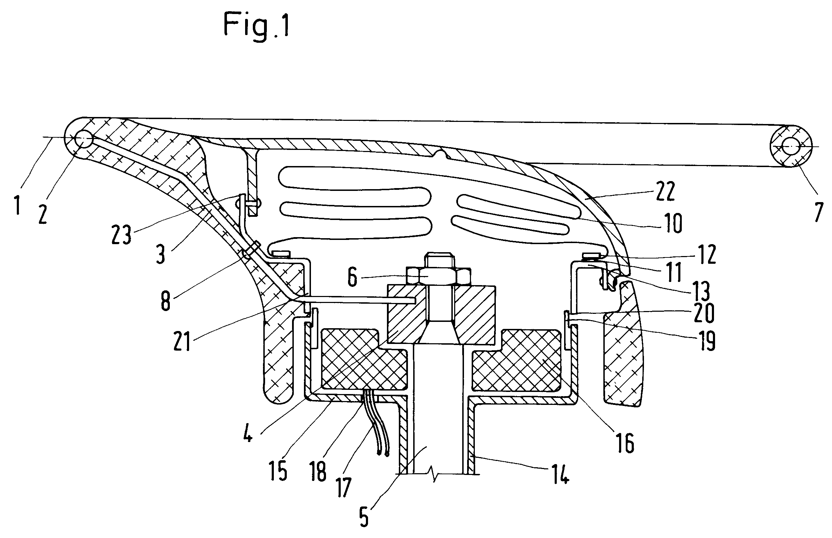

Die gemäß Fig. 1 gegenüber der Horizontalebene (1) des Lenkradkranzes (2) versenkt angeordnete, mit dem Lenkradkranz (2) über die Lenkradspeichen (3) verbundene Lenkradnabe (4) ist auf das Ende der Lenkwelle (5) aufgesetzt und mit dieser über die Schraubenmutter (6) verspannt. Die Lenkradspeichen (3) und der Lenkradkranz (2) sind mit einer PU-Integralschaumschicht (7) umhüllt. An den Lenkradspeichen (3) ist ein hutmanschettenförmiges Arretierungsblech für den die Gaseintrittsöffnung (9) des zusammengefalteten Gassacks (10) begrenzenden Rand (11), der durch Nieten (12) mit dem Flansch (13) des Arretierungsblechs verbunden ist, mittels Nieten (8) befestigt. Der lenkradseitige Endabschnitt der Lenksäule (14) besitzt eine zylinderförmige Erweiterung (15), in der ein hohlzylinderförmiger Gasgenerator (16) gestellfest eingefügt ist. Der elektrische Anschluß (17) des Gasgenerators (16) erfolgt direkt durch eine Bohrung (18) im Bodenbereich der Erweiterung (15) des lenkradseitigen Endabschnitts der Lenksäule (14). Am lenkradseitigen Innenrand der Erweiterung (15) der Lenksäule (14) ist eine ringförmige elastische Dichtlippe (19) angebracht, die unter Bildung eines engen Spalts (20) konzentrisch zu dem Schenkel (21) des hutmanschettenförmigen Arretierungsblechs für den Gassack (10) verläuft. Die Abdeckkappe (22) für den Gassack (10) ist an mit dem Flansch (13) des Arretierungsblechs verbundene schenkelartige Befestigungselemente (23) angeschlagen.

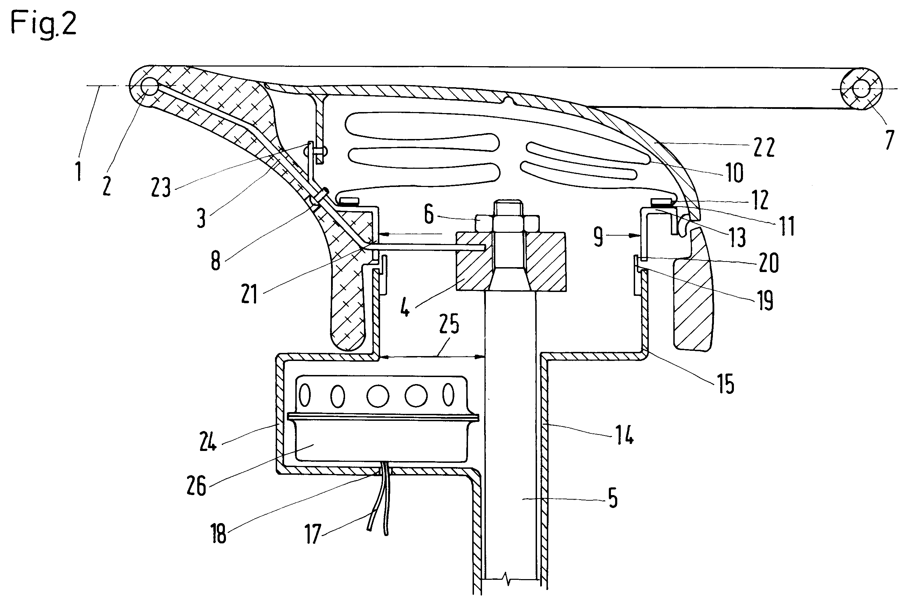

Die in Fig. 2 wiedergegebene Erfindung weicht insoweit von derjenigen nach Fig. 1 ab, als unter der Erweiterung (15) des lenkradseitigen Endabschnitts der Lenksäule (14) die Lenksäule mit einer Ausbuchtung (24) versehen ist, die über die im Boden der Erweiterung (15) befindliche Überströmöffnung (25) mit der Erweiterung (15) verbunden und in der ein zylinderförmiger Gasgenerator (26) befestigt ist.

Im Falle des Aufpralls des Fahrzeugs auf ein massives Hindernis wird der Gasgenerator (16, 26) gezündet. Es entsteht ein Innendruck im Lenkrad, der zunächst ein Anlegen der Dichtlippe (19) an den Schenkel (21) des Arretierungsblechs und damit eine völlige Abdichtung des Innenraums bewirkt. Der Innendruck steigt weiter an und öffnet die Abdeckkappe (22) definiert entlang von Sollreißlinien, so daß sich der Gassack (10) durch die infolge des seitlichen Wegklappens der Abdeckkappenteile entstandene Öffnung in das Fahrzeuginnere hinein entfalten kann.

Die mit der Erfindung erzielten Vorteile bestehen insbesondere darin, daß bedingt durch die gestellfeste Anordnung des Generators an der Lenksäule insbesondere die Kabel- und Steckverbindungen für die Energieversorgung zwischen der Lenkrad- und Lenksäulenseite des Fahrzeugs erheblich vereinfacht sind, so daß Defekte und Störungen an den Bauteilen nahezu ausgeschlossen sind. Durch die Anordnung des Gasgenerators auf der Lenksäulenseite des Fahrzeugs wird das Massenträgheitsmoment des Lenkrades deutlich erniedrigt. Die Abdichtung zwischen der Lenksäule und dem Lenkrad mittels der Dichtlippe erfolgt in Millisekunden und beeinflußt deshalb das Lenkverhalten im Unfallzeitpunkt nur unbedeutend.

## Patentansprüche

1. Lenkung für Kraftfahrzeuge mit an der in der gestellfesten Lenksäule (14) gelagerten Lenkwelle (5) befestigtem Lenkrad mit gegenüber der Horizontalebene (1) des Lenkradkranzes (2) versenkter Lenkradnabe (4) und integrierter Gassack-Aufprallschutzeinrichtung, bestehend aus einem zusammengefalteten, mit einer Kappe (22) mit definierter Sollreißlinie abgedecktem und mittels eines gestellfest angeordneten Gasgenerators (16, 26) infolge eines entsprechenden Fahrzeugpulses aufblasbaren Gassacks (10), dadurch gekennzeichnet, daß der über der versenkten Lenkradnabe angeordnete Gassack mit dem die Gaseintrittsöffnung (9) begrenzenden Rand an einem ringförmigen, mit den Lenkradspeichen (3) verbundenen Arretierungsblech befestigt ist, das konzentrisch zu einer am lenkradseitigen Innenrand der Lenksäule, deren lenkradseitiger Endabschnitt eine zylinderförmige Erweiterung (15) mit einem dem Innendurchmesser des Arretierungsblechs entsprechenden Innendurchmesser besitzt, angebrachten ringförmigen Dichtlippe (19) unter Bildung eines engen, die relative Beweglichkeit zwischen Arretierungsblech und Dichtlippe ermöglichenden Spalts (20) verläuft.

2. Lenkung nach Anspruch 1, dadurch gekennzeichnet, daß ein die Lenkwelle (5) umgebender hohlzylinder- oder kreistorusförmiger Gasgenerator (16) in der zylinderförmigen Erweiterung (15) des lenkradseitigen Endabschnitts der Lenksäule (14) eingefügt und befestigt ist.

3. Lenkung nach Anspruch 1, dadurch gekennzeichnet, daß der Gasgenerator (26) in einer unter der Erweiterung (15) des lenkradseitigen Endabschnitts der Lenksäule (14) angebrachten und mit dieser über eine Überströmöffnung (25) bzw. -kanal verbundenen Ausbuchtung (24) eingefügt und befestigt ist.

4. Lenkung nach einem der Ansprüche 1 bis 3, dadurch gekennzeichnet, daß das Arretierungsblech eine hutmanschettenförmige Gestalt besitzt, deren Flansch (13) an den Lenkradspeichen (3) angebracht ist und deren mit der Dichtlippe (19) einen engen Spalt (20) bildender Schenkel (21) parallel zur Lenkungsachse verläuft.
